# EUROPÄISCHE PATENTSCHRIFT

(11) **EP 1 141 490 B1**
(45) Veröffentlichungstag und Bekanntmachung des Hinweises auf die Patenterteilung: **02.04.2003**
(21) Anmeldenummer: 99966966.6
(22) Anmeldetag: 14.12.1999
(51) Int. Cl.: E02D 31/00, B09B 1/00

(54) **DICHTUNGSMATTE UND VERFAHREN ZUR HERSTELLUNG EINER DICHTUNGSMATTE**
SEALING MAT AND METHOD FOR PRODUCING SAME
MAT D'ETANCHEITE ET SON PROCEDE DE FABRICATION

(30) Priorität: 17.12.1998 DE 19858180
(43) Veröffentlichungstag der Anmeldung: 10.10.2001
(73) Patentinhaber: NaBento Vliesstoff GmbH, 08223 Falkenstein (DE)
(72) Erfinder: PETZOLD, Hermann, D-08107 Cunersdorf (DE); VON FRANSECKY, Ulrich, D-46395 Bocholt (DE)
(74) Vertreter: Freischem, Werner, Dipl.-Ing.
(86) Internationale Anmeldenummer: EP9909938
(87) Internationale Veröffentlichungsnummer: WO00036229

(56) Entgegenhaltungen:
- EP-A- 0 395 836
- EP-A- 0 436 928
- EP-A- 0 731 220
- GB-A- 2 155 854
- US-A- 5 322 581
- US-A- 5 401 118
- US-A- 5 804 112

## Beschreibung

Die Erfindung bezieht sich auf eine Dichtungsmatte, bestehend aus einer Trägerbahn, einer darauf aufgebrachten granulat- oder pulverförmigen Schicht aus quellfähigem Ton, insbesondere Bentonit, und aus einer Deckbahn, die Abstand haltend über Verbindungselemente mit der Trägerbahn verbunden ist, wobei die Verbindungselemente die Schicht aus quellfähigem Ton durchsetzen und die Trägerbahn und die Deckbahn aus Gewebe, Gewirke, Vliesstoff oder Kunststoff-Folie bestehen.

Dichtungsmatten dieser Art sind bekannt aus den US-Patenten 3 561 177, 4 565 468, 5 041 330 und 5 564 864.

Weil textile Trägerbahnen oder textile Deckbahnen nicht staubdicht sind, sind die Außenflächen der Dichtungsmatten mit Bentonitstaub bedeckt, nachdem die Dichtungsmatte nach der Herstellung aufgerollt, transportiert und zum Verlegen wieder abgerollt wurde. Wenn im eingebauten Zustand Wasser auf die Dichtungsmatte einwirkt, quillt die Bentonitstaubschicht an den Außenseiten der Dichtungsmatten und bildet so einen dünnen Schmierfilm, der bewirkt, daß an Böschungen das auf der Dichtungsmatte liegende Erdreich oder dieses Erdreich zusammen mit der Dichtungsmatte abgleiten kann.

Aber auch bei Dichtungsmatten, bei denen sich keine Staubschicht aus Quellton auf den Außenseiten der Dichtungsmatte absetzt, ist in Folge der Glätte der Trägerbahn und der Deckbahn die Haftreibung der Dichtungsmatte gegenüber dem Erdreich gering.

Aus der EP 0 731 220 A1 ist eine Dichtungsmatte bekannt mit einer zwischen einer textilen Trägerschicht und einer Deckschicht angeordneten pulver- oder granulatförmigen Bentonitschicht, die mit der Trägerschicht durch Einfügen einer Faserschicht vernadelt ist. Auf die mit der Trägerschicht vernadelte Bentonitschicht ist eine aus synthetischem Material bestehende Deckschicht angebracht, die auf die der Trägerschicht abgewandten Oberseite der Bentonitschicht durch Erwärmen auflaminiert ist. Die an der Oberseite der Bentonitschicht herausstehenden Faserenden werden dabei mit der Deckschicht verschweißt. Um die Haftung der Matte am Boden oder gegenüber einer Beschwerungsschicht zu erhöhen, ist auf die Deckschicht Sand aufgebracht und durch Erwärmung eingebunden.

Der Erfindung liegt die Aufgabe zugrunde, eine Dichtungsmatte der eingangs beschriebenen Art so zu verbessern, daß sie eine größere Haftreibung gegenüber dem Untergrund und dem aufliegenden Erdreich oder auch gegenüber einer Unterlage oder Auflage aus Kunststoff-Folie besitzt und gleichzeitig eine verbesserte Dichtwirkung erreicht wird.

Diese Aufgabe wird erfindungsgemäß dadurch gelöst, daß auf den beiden Außenseiten der Dichtungsmatte eine wasserunlösliche Klebstoffschicht aufgebracht ist, die einen flexiblen, elastischen Film bildet und in der Sandkörner, Splitt oder ein entsprechendes Granulat gehalten sind.

Der abgebundene, gelierte oder sonstwie verfestigte dünne, flexibel Klebstoff-Film hat nicht nur eine die Sandkörner auf den Außenflächen der Dichtungsmatte haltende Wirkung, sondern dieser Film hat auch eine Dichtwirkung, wodurch einerseits Austritt von Bentonitstaub durch das Gewebe der Trägerbahn und Deckbahn verhindert wird und andererseits der Zutritt von Wasser in die Schicht aus Bentonit gebremst wird und Auswaschungen oder Erosionen von Quellton oder Bentonit aus der Dichtungsmatte vermieden wird. Auch werden die Trocken-Naß-Zyklen der Dichtungsmatte deutlich gedämpft, so daß Rißbildungen in der Bentonitschicht 2 erheblich vermindert oder ausgeschlossen sind.

Wegen seines niedrigen Gewichtes und seiner günstigen Struktur ist als Beschichtung mit Sandkörnern oder Splitt gebrochener Blähschiefer sehr geeignet.

Der Erfindung liegt die weitere Aufgabe zugrunde, ein Verfahren zu schaffen, mit dem die erfindungsgemäße Dichtungsmatte preiswert hergestellt werden kann. Dieses Verfahren besteht darin, daß in bekannter Weise zunächst auf eine Trägerbahn, z.B. aus einem Gewebe oder Vliesstoff, Quellton in gleichmäßiger Dicke aufgetragen wird gegebenenfalls unter Einfügen einer Faserstruktur oder einer Schaumstofflage mit großporigen und offenen Zellen und daß darauf die Deckbahn, z.B. aus Gewebe oder Vliesstoff, zugeführt und mit der Trägerbahn vernäht oder vernadelt wird. Bei dem erfindungsgemäßen Verfahren wird nach dem Verbinden der Deckbahn mit der Trägerbahn auf die jeweils außen liegende Seite der Trägerbahn und der Deckbahn im wesentlichen ganzflächig eine einen wasserunlöslichen, flexiblen, elastischen Film bildende Klebstoffschicht aufgebracht, und vor dem Abbinden, Trocknen, Verfestigen oder Gelieren der Klebstoffschicht wird eine Schicht aus Sandkörnern, Splitt oder einem entsprechenden Granulat aufgebracht.

Das Aufbringen der Klebstoffschicht wird vorteilhafterweise unmittelbar nach dem Verbinden (Vernähen oder Vernadeln) der Deckbahn mit der Trägerbahn aufgebracht. Es hat sich gezeigt, daß es sehr vorteilhaft ist, die Klebstoffschicht in Form einer wäßrigen Bitumenemulsion aufzutragen. Dabei kann der Wasseranteil bei 40 bis 50% liegen. Diese Bitumenemulsion bildet sehr schnell einen dünnen undurchlässigen Film, auf dem die Sandkörner und der Splitt zuverlässig haften. Die wäßrige Bitumen- Emulsion bindet sehr schnell ab und verfestigt sich, weil der Wasseranteil zum großen Teil vom quellfähigen Ton bzw. vom Bentonit aufgenommen wird.

Zur Bildung der Klebstoffschicht ist aber auch eine wäßrige Kautschuk-Emulsion bzw. Latex geeignet. Schließlich kann aber auch der Klebstoff in Form einer wäßrigen Polymer-Dispersion aufgetragen werden. Diese Polymer-Dispersion kann insbesondere auch Polyacrylate enthalten.

In der folgenden Beschreibung wird unter Bezugnahme auf die Zeichnungen ein Ausführungsbeispiel der erfindungsgemäßen Dichtungsmatte beschrieben sowie anhand einer Prinzipdarstellung das erfindungsgemäße Verfahren näher erläutert. Die Zeichnungen zeigen in:
- Fig. 1: eine Draufsicht auf die Dichtungsmatte nach der Erfindung,
- Fig. 2: einen Querschnitt der erfindungsgemäßen Dichtungsmatte,
- Fig. 3: einen Querschnitt der erfindungsgemäßen Dichtungsmatte in einem anderen Maßstab und
- Fig. 4: eine Prinzipdarstellung der zur Herstellung der Dichtungsmatte geeigneten Anlage.

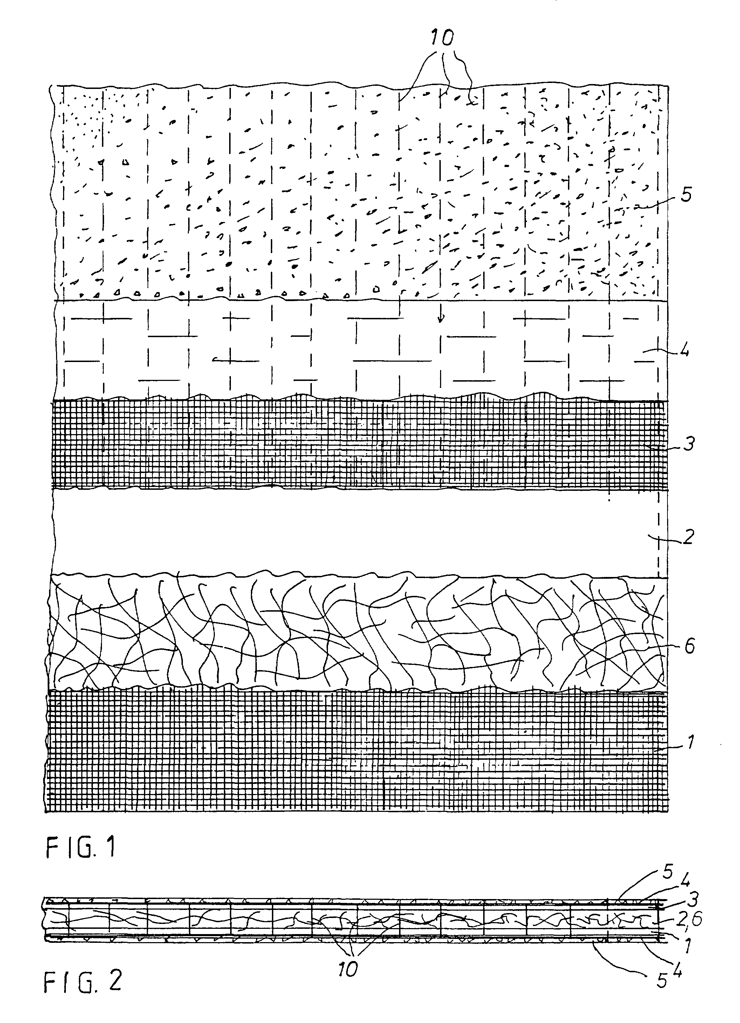

Die in Fig. 1 dargestellte Dichtungsmatte setzt sich zusammen aus der unteren Trägerbahn 1, die von einem Bändchengewebe gebildet wird, einer darauf aufgebrachten Strukturlage 6, die von einer lockeren Vlieslage oder einer offenporigen Schaumstoffschicht oder einer wabenförmigen Struktur gebildet wird und in die eine Schicht 2 aus quellfähigem Ton eingelagert wird. Über dieser Schicht 2 aus quellfähigem Ton befindet sich eine Deckbahn 3, die ebenfalls aus einem Bändchengewebe besteht. Auf der Außenseite der Deckbahn 3 ist eine Klebstoffschicht 4 aufgebracht. In dieser Klebstoffschicht 4 haftet eine Schicht 5 aus Sandkörnern, Splitt oder dergleichen Granulat. Bevor die Klebstoffschicht 4 und die Sandbeschichtung 5 aufgebracht wird, wird die Deckbahn 3 mit der Trägerbahn 1 über in Längsrichtung verlaufende Nähte 10 vernäht. Dabei bleibt die Dicke der Schicht 2 aus Quellton oder Bentonit auch im Bereich der Nähte 10 im wesentlichen erhalten. Die zueinander parallelen Nähte 10 haben einen Abstand von 2 bis 6 cm, je nachdem, welche Scherfestigkeit der Dichtungsmatte erwünscht ist. Die Unterseite der Trägerbahn 1 ist in gleicher Weise mit einer Klebstoffschicht 4 und einer Beschichtung 5 aus Sandkörnern, Splitt oder dergleichen Granulat versehen wie die Oberseite der Deckbahn 3.

Die Trägerbahn 1 und die Deckbahn 3 können aus Geweben, Vliesstoffen oder aus Kunststoff-Folie bestehen, sofern die Kunststoff-Folie aus einem beim Vernähen nicht einreißenden Material besteht und gegebenenfalls faserbewehrt ist. Unter Gewebe sind auch aus Kett- und Schußfäden bestehende Fadengelege zu verstehen, bei denen die Verbindung von Schuß- und Kettfäden nicht webtechnisch, sondern nähtechnisch oder wirktechnisch hergestellt wird.

Die abgebundene, gelierte oder sonstwie verfestigte dünne Klebstoffschicht 4 hat nicht nur eine die Sandkörner auf den Außenflächen der Dichtungsmatte haltende Wirkung, sondern diese Schicht 4 hat auch eine Dichtwirkung, wodurch einerseits Austritt von Bentonitstaub durch das Gewebe der Trägerbahn 1 und Deckbahn 3 verhindert wird und andererseits der Zutritt von Wasser in die Schicht 2 aus Bentonit gebremst wird und Auswaschungen oder Erosionen von Quellton oder Bentonit aus der Dichtungsmatte vermieden wird. Auch werden die Trocken-Naß-Zyklen der Dichtungsmatte deutlich gedämpft, so daß Rißbildungen in der Bentonitschicht 2 erheblich vermindert oder ausgeschlossen sind.

Die Dichtungsmatten sind beispielsweise 4 bis 5 m breit und werden einander überlappend verlegt, wobei die auf der rechten Seite folgende Dichtungsmatte mit ihrem linken Randbereich über den rechten Randbereich der vorher verlegten Matte verlegt wird. Diese Überlappungsbereiche sind 15 bis 30 cm breit. Um eine dichte Verbindung zwischen zwei nebeneinanderliegenden Dichtungsmatten zu erreichen, ist es bekannt, zwischen den beiden sich überlappenden Randbereichen 7,8 Bentonitpulver oder Bentonitgranulat oder Bentonitpaste anzuordnen.

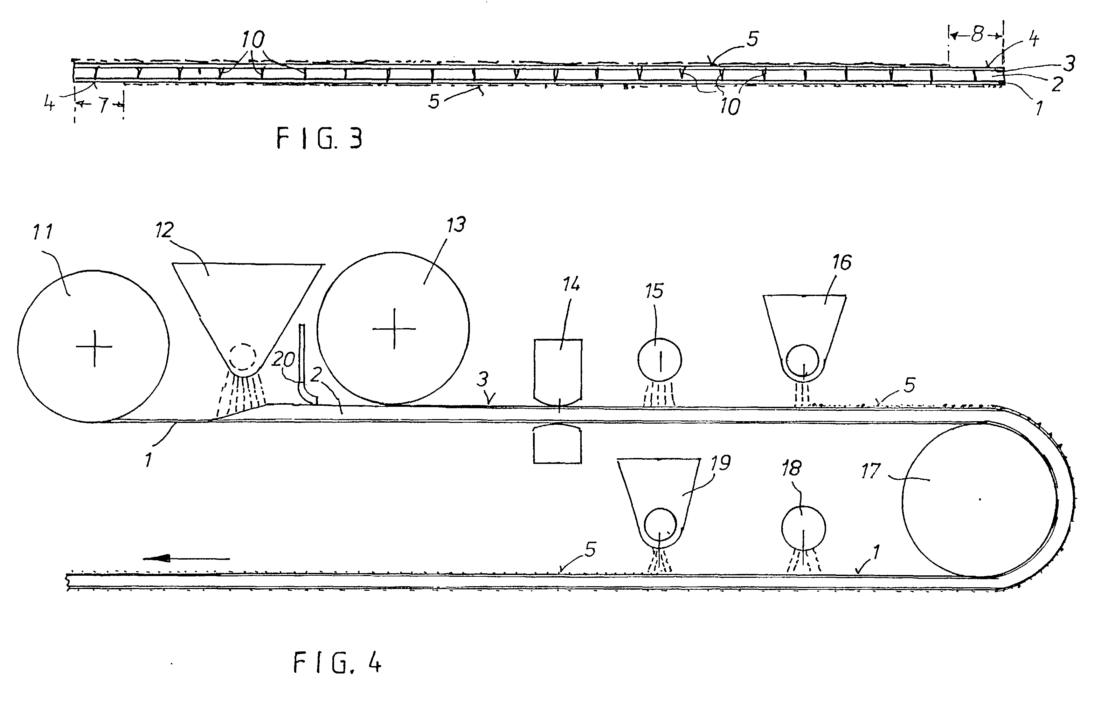

Wie die Fig. 3 zeigt, ist bei der erfindungsgemäßen Dichtungsmatte der Überlappungsbereich 7 am linken Rand der Trägerbahn 1 sowie der Überlappungsbereich 8 am rechten Rand der Deckbahn 3 frei von einer Sandbeschichtung. Damit dort die Klebekraft der Klebstoffschichten 4 erhalten bleibt, ist dort die Klebstoffschicht 4 mit einer Schutzfolie abgedeckt. Wird eine zweite oder weitere Dichtungsbahn neben eine schon verlegte Dichtungsbahn verlegt, dann sind die Schutzfolien abzuziehen, so daß die Klebstoffschicht 4 auf der Deckbahn 3 der verlegten Matte unmittelbar in Kontakt kommt mit der Klebstoffschicht 4 am Rande der Trägerbahn 1 der überlappend zu verlegenden Dichtungsmatte. Durch den unmittelbaren Kontakt der beiden Klebstoffschichten 4 kann eine zuverlässige Dichtung im Überlappungsbereich erzielt werden.

Es ist aber auch möglich, anstelle einer Schutzfolie im Überlappungsbereich Bentonit auf die Klebstoffschicht 4 aufzubringen.

Wie die Fig. 4 zeigt, wird von einer Rolle 11 die Trägerbahn 1 abgezogen. Es wird dann über die Breite dieser Trägerbahn 1 mittels der Verteilervorrichtung 12 Bentonit bzw. Quellton auf die Trägerbahn 1 aufgebracht. Sofern die Deckbahn 2 mit der Trägerbahn 1 mittels in Längsrichtung verlaufenden und im Abstand voneinander befindlichen Nähten vernäht wird, dann ist zur Fixierung der pulverförmigen Bentonitschicht notwendig, das Bentonitpulver in ein lockeres Vlies oder in eine offenporige Schaumstofflage oder in eine flache Wabenstruktur einzugeben, die dann nach Aufbringen der von einer Rolle 13 abgezogenen Deckbahn 3 mit der Trägerbahn 1 vernäht wird. Die Nähmaschine 14 erzeugt über die gesamte Breite der Dichtungsmatte in Abständen von 2 bis 6 cm in Längsrichtung der Dichtungsmatte verlaufende Nähte. Dabei bleibt auch im Bereich der Nähte die Dicke der Schicht 2 aus Quellton im wesentlichen erhalten. Nach dem Verbinden der Deckbahn 3 mit der Trägerbahn 1 wird auf die Deckbahn 3 mittels einer Sprühvorrichtung 15 Klebstoff aufgesprüht. Danach werden mittels einer Verteilervorrichtung 16 über die Breite der Dichtungsbahn Sandkörner, Splitt oder dergleichen Granulat auf die Klebstoffschicht 4 der Deckbahn 3 aufgebracht. Danach wird die Dichtungsbahn mittels einer Umlenkrolle 17 um 180° gewendet, so daß die Trägerbahn 1 nun oben liegt. Auf diese Trägerbahn 1 werden nun mittels der Sprühvorrichtung 18 Klebstoff und mittels der Verteilervorrichtung 19 Sandkörner oder Splitt auf die Klebstoffschicht 4 der Trägerbahn 1 aufgebracht.

Vorteilhafterweise werden die Klebstoffschichten 4 als wäßrige Emulsion oder wäßrige Dispersion auf die Außenfläche der Dichtungsmatte aufgesprüht. Der wäßrige Klebstoff trocknet relativ schnell, weil das Wasser die durchlässige Trägerbahn 1 und Deckbahn 3 durchdringt und vom Quellton bzw. Bentonit aufgenommen wird.

Die Größe, die Art und die Dichte der Sandkörner ist abhängig von der jeweils geforderten Haftfähigkeit der Dichtungsmatte. Es kann feiner Sand, scharfer Sand und auch Splitt Anwendung finden. Die Körnung des Sandes, Splitts oder eines dementsprechenden Granulats liegt im Bereich von 0,1 bis 2 mm, vorzugsweise 0,5 bis 1,2 mm. Je Quadratmeter Dichtungsmatte ist eine Sandmenge von 400 bis 1200 g/m², vorzugsweise 700 bis 900 g/m² erforderlich.

### Bezugszeichenliste:

- 1: Trägerbahn
- 2: Zwischenschicht aus quellfähigem Ton
- 3: Deckbahn
- 4: Klebstoffschicht
- 5: Schicht aus Sandkörnern, Splitt
- 6: Strukturlage
- 7: Überlappungsbereich der Trägerbahn
- 8: Überlappungsbereich der Deckbahn

- 10: Nähte
- 11: Trägerbahnrolle
- 12: Bentonit-Verteilervorrichtung
- 13: Deckbahnrolle
- 14: Nähmaschine
- 15: Aufsprühvorrichtung für Klebstoff
- 16: Sand-Verteilervorrichtung
- 17: Umlenkwalze
- 18: Aufsprühvorrichtung für Klebstoff
- 19: Sand-Verteilervorrichtung
- 20: Abziehleiste

## Patentansprüche

1. Dichtungsmatte, bestehend aus einer Trägerbahn (1), einer darauf aufgebrachten granulat- oder pulverförmigen Schicht (2) aus quellfähigem Ton, insbesondere Bentonit, und aus einer Deckbahn (3), die Abstand haltend über Verbindungselemente mit der Trägerbahn (1) verbunden ist, wobei die Verbindungselemente die Schicht aus quellfähigem Ton durchsetzen und die Trägerbahn (1) und die Deckbahn (3) aus Gewebe, Gewirke, Vliesstoff oder Kunststoff-Folie bestehen, **dadurch gekennzeichnet, daß** auf den beiden Außenseiten der Dichtungsmatte eine wasserunlösliche Klebstoffschicht (4) aufgebracht ist, die einen flexiblen, elastischen Film bildet und in der Sandkörner, Splitt oder ein entsprechendes Granulat gehalten sind.

2. Dichtungsmatte nach Anspruch 1, **dadurch gekennzeichnet, daß** die Deckbahn (3) mit der Trägerbahn (1) über parallele, im Abstand von 20 bis 60 mm verlaufende Nähte (10) verbunden ist und die Schicht aus pulverförmigem oder granulatförmigem Quellton von einer Kammern bildenden Struktur (6) oder durch Fasern zwischen Trägerbahn (1) und Deckbahn (3) gehalten ist.

3. Dichtungsmatte nach Anspruch 2, **dadurch gekennzeichnet, daß** die Trägerbahn (1) und die Deckbahn (3) aus Bändchengewebe, insbesondere aus Polypropylen, bestehen.

4. Dichtungsmatte nach einem der Ansprüche 1 bis 3, **dadurch gekennzeichnet, daß** die Körnung des Sandes, Splitts oder Granulats im Bereich von 0,1 bis 2 mm, vorzugsweise 0,5 bis 1,2 mm liegt.

5. Dichtungsmatte nach Anspruch 4, **dadurch gekennzeichnet, daß** das Granulat Blähschiefer ist

6. Dichtungsmatte nach einem der Ansprüche 1 bis 5, **dadurch gekennzeichnet, daß** die Klebstoffschicht (4) Bitumen ist.

7. Dichtungsmatte nach einem der Ansprüche 1 bis 6, **dadurch gekennzeichnet, daß** ein beispielsweise 15 cm bis 30 cm breiter Überlappungsbereich (7) der Trägerbahn (1) und ein auf der jeweils diagonal anderen Seite der Dichtungsmatte befindlicher ebenso breiter Überlappungsbereich (8) der Deckbahn (3) ohne Sand- oder Splittbeschichtung (5) ist.

8. Dichtungsmatte nach Anspruch 7, **dadurch gekennzeichnet, daß** die von einer Sand- oder Splittbeschichtung (5) freie Klebstoffschicht (4) in den Überlappungsbereichen (7 und 8) der Trägerbahn (1) und der Deckbahn (3) durch je eine abziehbare Schutzfolie abgedeckt ist.

9. Dichtungsmatte nach Anspruch 8, **dadurch gekennzeichnet, daß** die von einer Sand- oder Splittbeschichtung (5) freie Klebstoffschicht (4) in den Überlappungsbereichen (7 und 8) der Trägerbahn (1) und der Deckbahn (3) mit pulver- oder granulatförmigem Quellton, insbesondere Bentonit, beschichtet ist.

10. Verfahren zur Herstellung einer Dichtungsmatte, bestehend aus einer Trägerbahn (1), einer darauf aufgebrachten granulat- oder pulverförmigen Schicht (2) aus quellfähigem Ton, insbesondere Bentonit, und aus einer Deckbahn (3), die Abstand haltend über Verbindungselemente mit der Trägerbahn (1) verbunden ist, wobei die Verbindungselemente die Schicht (2) aus quellfähigem Ton durchsetzen und die Trägerbahn (1) und die Deckbahn (3) aus Gewebe, Gewirke, Vliesstoff oder Kunststoff-Folie bestehen, **dadurch gekennzeichnet, daß** nach dem Verbinden der Deckbahn (3) mit der Trägerbahn (1) auf die jeweils außen liegende Seite der Trägerbahn (1) und der Deckbahn (3) ganzflächig eine wasserunlösliche und einen flexiblen, elastischen Film bildende Klebstoffschicht (4) aufgebracht wird und vor dem Abbinden, Trocknen, Verfestigen oder Gelieren der Klebstoffschicht (4) Sandkörner (5), Splitt oder ein entsprechendes Granulat aufgebracht wird.

11. Verfahren nach Anspruch 10, **dadurch gekennzeichnet, daß** die Klebstoffschicht (4) in Form einer wässrigen Bitumen-Emulsion aufgetragen wird.

12. Verfahren nach Anspruch 10, **dadurch gekennzeichnet, daß** die Klebstoffschicht (4) in Form einer wäßrigen Kautschuk-Emulsion bzw. von Latex aufgetragen wird.

13. Verfahren nach Anspruch 10, **dadurch gekennzeichnet, daß** die Klebstoffschicht (4) in Form einer wäßrigen Polymer-Dispersion aufgetragen wird.

14. Verfahren nach Anspruch 13, **dadurch gekennzeichnet, daß** die Polymer-Dispersion Polyacrylate enthält.

15. Verfahren nach einem der Ansprüche 10 bis 14, **dadurch gekennzeichnet, daß** die in Form einer Emulsion, Dispersion oder Lösung aufzubringende Klebstoffschicht (4) auf die Außenflächen der Dichtungsmatte aufgesprüht wird.

16. Verfahren nach einem der Ansprüche 10 bis 15, **dadurch gekennzeichnet, daß** nach dem Verbinden der Deckbahn (3) mit der Trägerbahn (1) die Klebstoffschicht (4) und dann die Schicht (5) aus Sandkörnern, Splitt oder einem entsprechenden Granulat auf die Außenseite der Deckbahn (3) aufgebracht wird und danach die Bahn der Dichtungsmatte über eine Umlenkwalze (17) um ca. 180° umgelenkt wird und dann auf die obenliegende Außenseite der Trägerbahn (1) eine Klebstoffschicht (4) und dann eine Schicht (5) aus Sandkörnern, Splitt oder dergleichen Granulat aufgebracht wird.

17. Verfahren nach Anspruch 16, **dadurch gekennzeichnet, daß** je m² der Dichtungsmatte auf beiden Seiten 200 g bis 600 g Sand, Splitt oder ein entsprechendes Granulat aufgebracht wird.

18. Verfahren nach einem der Ansprüche 10 bis 17, **dadurch gekennzeichnet, daß** die Klebstoffschicht (4) derart auf die Außenseiten der Dichtungsmatte aufgebracht wird, daß die Überlappungsbereiche (7 und 8) der Trägerbahn (1) und der Deckbahn (3) von Klebstoff frei bleiben.

19. Verfahren nach einem der Ansprüche 10 bis 17, **dadurch gekennzeichnet, daß** vor dem Abbinden oder Gelieren der Klebstoffschicht (4) in den Überlappungsbereichen (7,8) der Dichtungsmatte auf die Klebstoffschicht (4) pulver- oder granulatförmiger Quellton, insbesondere Bentonit, aufgebracht wird.

20. Verfahren nach einem der Ansprüche 10 bis 17, **dadurch gekennzeichnet, daß** in den Überlappungsbereichen (7 und 8) der Trägerbahn (1) und der Deckbahn (3) auf die Klebstoffschicht (4) eine abziehbare Schutzfolie aufgeklebt wird.

## Revendications

1. Mat d'étanchéité, composé d'un voile support (1), d'une couche (2) d'argile apte à gonfler, notamment de la bentonite, déposée sous forme granulaire ou pulvérulente sur ce voile et d'un voile de recouvrement (3) relié à distance au voile support (1) par des éléments de liaison, lesdits éléments de liaison traversant la couche d'argile apte à gonfler, et le voile support (1) et le voile de recouvrement (3) consistant en un tissu tissé ou à mailles, un non-tissé ou un film plastique, **caractérisé en ce que** sur les deux faces externes du mat d'étanchéité est appliquée une couche de colle (4) insoluble dans l'eau, qui forme un film élastique flexible et dans laquelle sont maintenus des grains de sable, gravillon ou autre granulat adapté.

2. Mat d'étanchéité selon la revendication 1, **caractérisé en ce que** le voile de recouvrement (3) est relié au voile support (1) par des coutures parallèles (10) distantes de 20 à 60 mm et **en ce que** la couche d'argile apte à gonfler sous forme pulvérulente ou granulaire est maintenue entre le voile support (1) et le voile de recouvrement (3) par une structure alvéolaire (6) ou par des fibres.

3. Mat d'étanchéité selon la revendication 2, **caractérisé en ce que** le voile support (1) et le voile de recouvrement (3) consistent en un tissu de bandelettes, notamment en polypropylène.

4. Mat d'étanchéité selon l'une des revendications 1 à 3, **caractérisé en ce que** la granulométrie du sable, gravillon ou granulat est comprise entre environ 0,1 et 2 mm et de préférence entre 0,5 et 1,2 mm.

5. Mat d'étanchéité selon la revendication 4, **caractérisé en ce que** le granulat consiste en du schiste expansé.

6. Mat d'étanchéité selon l'une des revendications 1 à 5, **caractérisé en ce que** la couche de colle (4) consiste en du bitume.

7. Mat d'étanchéité selon l'une des revendications 1 à 6, **caractérisé en ce qu'**une zone de chevauchement (7) large de 15 à 30 cm par exemple que présente le voile support (1) et une zone de chevauchement (8) de même largeur que présente le voile de recouvrement (3) sur le côté diamétralement opposé du mat d'étanchéité sont dépourvues de couche de sable ou de gravillon (5).

8. Mat d'étanchéité selon la revendication 7, **caractérisé en ce que** la couche de colle (4) dépourvue de couche de sable ou de gravillon (5) au niveau des zones de chevauchement (7 et 8) du voile support (1) et du voile de recouvrement (3) est recouverte d'un film de protection amovible.

9. Mat d'étanchéité selon la revendication 8, **caractérisé en ce que** la couche de colle (4) dépourvue de couche de sable ou de gravillon (5) au niveau des zones de chevauchement (7 et 8) du voile support (1) et du voile de recouvrement (3) est revêtue d'argile apte à gonfler, notamment de bentonite, sous forme pulvérulente ou granulaire.

10. Procédé de fabrication d'un mat d'étanchéité, composé d'un voile support (1), d'une couche (2) d'argile apte à gonfler, notamment de la bentonite, déposée sous forme granulaire ou pulvérulente sur ce voile et d'un voile de recouvrement (3) relié à distance au voile support (1) par des éléments de liaison, lesdits éléments de liaison traversant la couche (2) d'argile apte à gonfler, et le voile support (1) et le voile de recouvrement (3) consistant en un tissu tissé ou à mailles, un non-tissé ou un film plastique, **caractérisé en ce qu'**une couche de colle (4) insoluble dans l'eau et formant un film élastique flexible est appliquée sur toute la surface des faces externes du voile support (1) et du voile de recouvrement (3) après assemblage du voile de recouvrement (3) et du voile support (1), et **en ce que** des grains de sable (5), gravillon ou autre granulat adapté sont déposés avant prise, séchage, solidification ou gélification de la couche de colle (4).

11. Procédé selon la revendication 10, **caractérisé en ce que** la couche de colle (4) est appliquée sous la forme d'une émulsion aqueuse de bitume.

12. Procédé selon la revendication 10, **caractérisé en ce que** la couche de colle (4) est appliquée sous la forme d'une émulsion aqueuse de caoutchouc ou sous la forme de latex.

13. Procédé selon la revendication 10, **caractérisé en ce que** la couche de colle (4) est appliquée sous la forme d'une dispersion de polymères dans l'eau.

14. Procédé selon la revendication 13, **caractérisé en ce que** la dispersion de polymères contient des polyacrylates.

15. Procédé selon l'une des revendications 10 à 14, **caractérisé en ce que** la couche de colle (4) à appliquer sous la forme d'une émulsion, d'une dispersion ou d'une solution est pulvérisée sur les faces externes du mat d'étanchéité.

16. Procédé selon l'une des revendications 10 à 15, **caractérisé en ce qu'**après assemblage du voile de recouvrement (3) et du voile support (1), l'on applique la couche de colle (4) puis la couche (5) de grains de sables, gravillon ou autre granulat adapté sur la face externe du voile de recouvrement (3), puis l'on dévie d'environ 180° la nappe de mat d'étanchéité autour d'un cylindre déflecteur (17) et l'on applique ensuite sur la couche externe du voile support (1), qui se trouve alors orientée vers le haut, une couche de colle (4) puis une couche (5) de grains de sable, gravillon ou autre granulat adapté.

17. Procédé selon la revendication 16, **caractérisé en ce que** le mat d'étanchéité reçoit sur ses deux faces 200 g à 600 g/m² de sable, gravillon ou autre granulat adapté.

18. Procédé selon l'une des revendications 10 à 17, **caractérisé en ce que** la couche de colle (4) est appliquée sur les faces externes du mat d'étanchéité de telle sorte que les zones de chevauchement (7 et 8) du voile support (1) et du voile de recouvrement (3) restent exemptes de colle.

19. Procédé selon l'une des revendications 10 à 17, **caractérisé en ce qu'**avant la prise ou la gélification de la couche de colle (4) est appliquée sur ladite couche de colle (4), au niveau des zones de chevauchement (7, 8) du mat d'étanchéité, de l'argile apte à gonfler, notamment de la bentonite, sous forme pulvérulente ou granulaire.

20. Procédé selon l'une des revendications 10 à 17, **caractérisé en ce qu'**un film de protection amovible est collé sur la couche de colle (4) au niveau des zones de chevauchement (7 et 8) du voile support (1) et du voile de recouvrement (3).

## Claims

1. A sealing mat, consisting of a backing web (1), a granular or powdery layer (2) of swellable clay, in particular bentonite, applied thereto and a top web (3), which is connected spacedly to the backing web (1) via connecting elements, wherein the connecting elements pass through the layer of swellable clay and the backing web (1) and the top web (3) consist of woven, knitted or nonwoven fabric or plastics film, **characterised in that** a water-insoluble adhesive layer (4) is applied to both outer sides of the sealing mat, which adhesive layer (4) forms a flexible, elastic film and in which grains of sand, grit or an appropriate granular material are contained.

2. A sealing mat according to claim 1, **characterised in that** the top web (3) is connected with the backing web (1) via parallel seams (10) spaced by from 20 to 60 mm and the layer of powdery or granular swellable clay is retained between backing web (1) and top web (3) by a chamber-forming structure (6) or by fibres.

3. A sealing mat according to claim 2, **characterised in that** the backing web (1) and the top web (3) consist of tape fabric, in particular of polypropylene.

4. A sealing mat according to one of claims 1 to 3, **characterised in that** the grain size of the sand, grit or granular material is in the range of from 0.1 to 2 mm, preferably 0.5 to 1.2 mm.

5. A sealing mat according to claim 4, **characterised in that** the granular material is expanded shale.

6. A sealing mat according to one of claims 1 to 5, **characterised in that** the adhesive layer (4) is bitumen.

7. A sealing mat according to one of claims 1 to 6, **characterised in that** an overlap area (7) of the backing web (1) which is for example 15 cm to 30 cm wide and an overlap area (8) of the top web (3) which is located on the respectively diagonally opposite side of the sealing mat and is of the same width are without a sand or grit coating (5).

8. A sealing mat according to claim 7, **characterised in that**, in the overlap areas (7 and 8) of the backing web (1) and the top web (3), the adhesive layer (4), which is free of a sand or grit coating (5), is covered in each case by a peelable protective film.

9. A sealing mat according to claim 8, **characterised in that**, in the overlap areas (7 and 8) of the backing web (1) and the top web (3), the adhesive layer (4), which is free of a sand or grit coating (5), is coated with powdery or granular swellable clay, in particular bentonite.

10. A method of producing a sealing mat, consisting of a backing web (1), a granular or powdery layer (2) of swellable clay, in particular bentonite, applied thereto and a top web (3), which is connected spacedly to the backing web (1) via connecting elements, wherein the connecting elements pass through the layer (2) of swellable clay and the backing web (1) and the top web (3) consist of woven, knitted or nonwoven fabric or plastics film, **characterised in that**, after connection of the top web (3) with the backing web (1), a water-insoluble adhesive layer (4) forming a flexible, elastic film is applied over the entire surface area of the respective outer sides of the backing web (1) and the top web (3) and sand grains (5), grit or an appropriate granular material is/are applied prior to setting, drying, solidifying or gelling of the adhesive layer (4).

11. A method according to claim 10, **characterised in that** the adhesive layer (4) is applied in the form of an aqueous bitumen emulsion.

12. A method according to claim 10, **characterised in that** the adhesive layer (4) is applied in the form of an aqueous rubber emulsion or latex.

13. A method according to claim 10, **characterised in that** the adhesive layer (4) is applied in the form of an aqueous polymer dispersion.

14. A method according to claim 13, **characterised in that** the polymer dispersion contains polyacrylates.

15. A method according to one of claims 10 to 14, **characterised in that** the adhesive layer (4) to be applied in the form of an emulsion, dispersion or solution is sprayed onto the outer surfaces of the sealing mat.

16. A method according to one of claims 10 to 15, **characterised in that**, after connection of the top web (3) with the backing web (1), the adhesive layer (4) and then the layer (5) of sand grains, grit or an appropriate granular material are applied to the outer side of the top web (3) and then the sealing mat web is turned by approx. 180° by means of a deflection roller (17) and then an adhesive layer (4) and then a layer (5) of sand grains, grit or similar granular material are applied to the uppermost, outer side of the backing web (1).

17. A method according to claim 16, **characterised in that** 200 g to 600 g of sand, grit or an appropriate granular material are applied to both sides per m² of sealing mat.

18. A method according to one of claims 10 to 17, **characterised in that** the adhesive layer (4) is applied to the outer sides of the sealing mat in such a way that the overlap areas (7 and 8) of the backing web (1) and the top web (3) remain free of adhesive.

19. A method according to one of claims 10 to 17, **characterised in that**, prior to setting or gelling of the adhesive layer (4), powdery or granular swellable clay, in particular bentonite, is applied to the adhesive layer (4) in the overlap areas (7, 8) of the sealing mat.

20. A method according to one of claims 10 to 17, **characterised in that** a peelable protective film is stuck onto the adhesive layer (4) in the overlap areas (7 and 8) of the backing web (1) and the top web (3).
